(19) Europäisches Patentamt

European Patent Office

Office européen des brevets

(11) EP 0 852 332 B1

(12) **EUROPEAN PATENT SPECIFICATION**

(45) Date of publication and mention
of the grant of the patent:
**09.07.2003 Bulletin 2003/28**

(51) Int Cl.⁷: **G01L 5/22**, G01L 1/22,
G06K 11/18, G01L 5/16,
G05G 9/047

(21) Application number: **98300034.0**

(22) Date of filing: **06.01.1998**

(54) **Load sensing structure**

Lastempfindliche Struktur

Structure sensible à une charge

(84) Designated Contracting States:
**FI FR GB**

(30) Priority: **07.01.1997 JP 51597**

(43) Date of publication of application:
**08.07.1998 Bulletin 1998/28**

(73) Proprietor: **Matsushita Electric Industrial Co., Ltd.**
**Kadoma-shi, Osaka 571-0050 (JP)**

(72) Inventors:
 • **Shigemoto, Hideki**
 **Osaka 538 (JP)**
 • **Takabatake, Kenichi**
 **Ibaraki-shi, Osaka 567 (JP)**
 • **Yamamoto, Tamotsu**
 **Ashiya-shi, Hyogo-ken 659 (JP)**

(74) Representative: **Senior, Alan Murray et al**
**J.A. KEMP & CO.,**
**14 South Square,**
**Gray's Inn**
**London WC1R 5JJ (GB)**

(56) References cited:
**EP-A- 0 663 648**

• **PATENT ABSTRACTS OF JAPAN vol. 096, no. 008, 30 August 1996 & JP 08 087375 A (FUJITSU LTD), 2 April 1996,**
• **PATENT ABSTRACTS OF JAPAN vol. 095, no. 010, 30 November 1995 & JP 07 174646 A (MATSUSHITA ELECTRIC IND CO LTD), 14 July 1995,**

## Description

The present invention relates generally to a load sensor for use in an operating unit for game machines, a pointing device for personal computers, or a remote controller for electronic devices which is moved back and force or laterally to control a position indicator on a display screen.

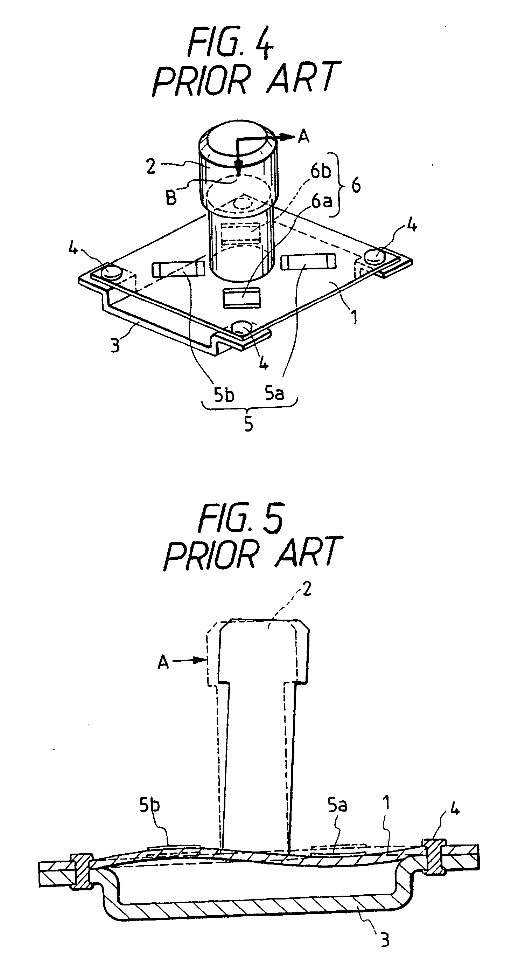

Fig. 4 shows a conventional load sensor used with a pointing device as disclosed in Japanese Patent First Publication No. 7-174646.

The load sensor includes an elastic plate 1, a rigid operating lever 2, and first and second strain gauge pairs 5 and 6. The first and second strain gauge pairs 5 and 6 include strain gauges 5a and 5b and strain gauges 6a and 6b, respectively, which are attached to the elastic plate 1 around the operating lever 2 at intervals of 90°. The elastic plate 1 is installed at four support points on a mount base 3 using fixtures 4.

In operation, when a lateral force is, as shown in Fig. 5, applied to the top of the operating lever 2 from a direction A, it will cause the elastic plate 1 to be deformed so that the strain gauge 5a is biased downward, while the strain gauge 5b is biased upward, thereby resulting in a drop in resistance of the strain gauge 5a and a rise in resistance of the strain gauge 5b.

The magnitude of the applied force is determined by finding a difference in resistance between the strain gauges 5a and 5b and doubling it.

The strain gauges 6a and 6b of the second pair both experience only torsional stress in the same direction so that a change in resistance does not occur. Specifically, the load sensor is designed to detect only a component of the applied force along an axis of coordinate passing through the first pair of strain gauges 5a and 5b.

Similarly, when a lateral force is, as shown in Fig. 4, applied to the top of the operating lever 2 from a direction B perpendicular to the direction A, the load sensor detects a component of the applied force along an axis of coordinate passing through the strain gauges 6a and 6b of the second pair.

Specifically, the load sensor resolves the force applied to the operating lever 2 into two components along x and y axes of a two dimensional coordinate system to determine the magnitude and direction of the applied force.

The above prior art load sensor, however, has the drawback in that since the magnitude of an applied load is determined only based on deformation of the elastic plate 1, an allowable displacement of the operating lever 2 is small, resulting in difficulty in adjusting input of the applied load finely. Load sensors operating on the same principles are also disclosed in JP-A-08 087 375 and EP-0 663 648 A.

It is therefore an aim of the present invention to avoid or alleviate the disadvantages of the prior art.

It is another aim of the present invention to provide a load sensor capable of adjusting input of a load finely.

According to the present invention, there is provided a load sensor comprising:

> a mount base;
> an elastic plate secured on said mount base;
> an operating member having a given length, said operating member being installed at a first end thereof on said elastic plate so as to be bent in response to application of a lead to a second end opposite the first end, producing an elastic force to deform said elastic plate; and
> a plurality of strain detecting elements attached to said elastic plate at given angular intervals; characterised in that:
>
>> said operating member includes a rigid head, a coil spring, and a mount member, the rigid head and the mount member being fitted into ends of the coil spring, respectively, the mount member being disposed through said elastic plate on a pivot formed on said mount base.

In the preferred mode of the invention, the pivot is formed on the mount base which supports the first end of the operating member so as to absorb a vertical component of the load acting perpendicular to the elastic plate.

Each of the strain detecting elements may be made of a strain sensitive element printed on the elastic plate or a strain gauge bonded to the elastic plate.

The mount base may include a bottom, a side wall surrounding the bottom and flanges extending vertically from a periphery of the bottom. The elastic plate is installed on the flanges so as to cover the bottom. The pivot is formed on the bottom.

The present invention will be further described below with reference to exemplary embodiments and the accompanying drawings, in which:-

> Fig. 1 is a perspective view which shows a first example of a load sensor described for reference;
> Fig. 2 is a partial cross sectional view which shows an operation of the load sensor in Fig. 1;
> Fig. 3 is a vertical cross sectional view which shows a load sensor according to an embodiment of the invention;
> Fig. 4 is a perspective view which shoes a conventional load sensor; and
> Fig. 5 is a partial cross sectional view which shows an operation of the conventional load sensor in Fig. 4.

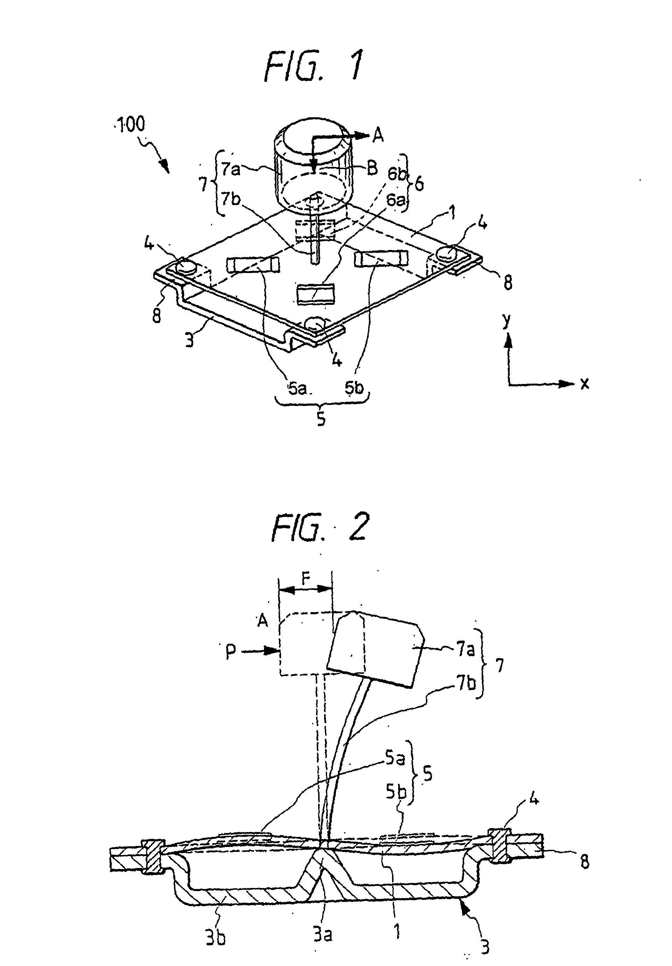

Referring now to the drawings, particularly to Fig. 1, there is shown a load sensor 100 according to the first example which is employed as a pointing device.

The load sensor 100 generally includes an elastic plate 1, an operating shaft or lever 7, first and second strain sensitive element pairs 5 and 6, and a mount base 3. The elastic plate 1 is installed at four support points on the mount base 3 using fixtures 4. The operating lever 7 is installed in the center of the elastic plate 1 and includes a head 7a made of a rigid material and a straight support shaft 7b made of an elastic metal. The mount base 3 is made of a pressed rigid member including a bottom 3b, four flanges 8, and a conical protrusion or pivot 3a. The flanges 8 extend vertically from four corners of the bottom 3b and support the elastic plate 1. The pivot 3a is formed on the center of the bottom. The support shaft 7b is, as clearly shown in Fig. 2, inserted at a lower end into and bonded to an opening of the elastic plate 1, and supported on the pivot 3a of the mount base 3. The support shaft 7b supports at an upper end the head 7a so that when a lateral load or force is applied to the head 7a of the operating lever 7 from any direction, the elastic plate 1 is deformed without being subjected to a vertical load directly from the support shaft 7b.

The first and second strain sensitive element pairs 5 and 6 include strain sensitive elements 5a and 5b and strain sensitive elements 6a and 6b, respectively, which are attached to the elastic plate 1 symmetrically around the operating lever 7. The symmetrical arrangement of the four strain sensitive elements 5a to 6b means that they are disposed at angular intervals of 90°. Specifically, the strain sensitive elements 5a and 5b of the first pair are, as apparent from the above, diametrically opposed to each other along a line (hereinafter, referred to as the x axis of a two-dimensional coordinate system). Similarly, the strain sensitive elements 6a and 6b of the second pair are diametrically opposed to each other along a line (hereinafter, referred to as the y axis). The four strain sensitive elements 5a to 6b have the same resistance value.

In operation, application of the lateral force P, as shown in Fig. 2, to the head 7a of the operating lever 7 from the direction A along the x axis will cause the support shaft 7b to be bent laterally to produce the elastic force acting on the elastic plate 1 so that the elastic plate 1 is deformed or waved. If the lateral displacement of the head 7a of the operating lever 5 is defined as F, then it may be expressed by the following equation.

$$F = (64L^3 / 3\pi Ed^4)\, P$$

where E is the modulus of direct elasticity or Young's modulus of the support shaft 7b, d is the diameter of the support shaft 7b, and L is the length of the support shaft 7b.

The above equation shows that the lateral displacement F of the head 7a of the operating lever 7 is proportional to the lateral force P applied to the head 7a. Specifically, the lateral force P applied to the head 7a of the operating lever 7 is translated into elastic deformation of the elastic plate 1 through the support shaft 7b, which is, in turn, sensed by the first and second strain sensitive element pairs 5 and 6. A desired amount of the lateral displacement of the head 7a of the operating lever 7 may be determined by adjusting the Young's modulus (i.e., material), the diameter, and/or the length of the support shaft 7b of the operating lever 7.

The application of the elastic force to the elastic plate 1 from the support shaft 7b of the operating lever 7 causes the strain sensitive element 5a to be strained downward, while the strain sensitive element 5b is strained upward, thus resulting in a drop in resistance of the strain sensitive element 5a and a rise in resistance of the strain sensitive element 5b. This produces a difference in resistance between the strain sensitive elements 5a and 5b which can be monitored to determine the magnitude of the lateral force P applied to the operating lever 7.

The strain sensitive elements 6a and 6b of the second pair are subjected only to torsion, resulting in no change in resistance thereof.

When a lateral force is applied to the head 7a of the operating lever 7 from a direction along the y axis, the resistance values only of the strain sensitive elements 6a and 6b are changed. The magnitude of the applied force can be determined by monitoring a difference in resistance between the strain sensitive elements 6a and 6b.

Therefore, when a lateral force is applied to the operating lever 7 from any direction between the x and y axes, it may be measured in direction based on a ratio of a difference in resistance of the first strain sensitive element pair 5 to that of the second strain sensitive element pair 6 and in magnitude based on the sum of the differences in resistance of the first and second strain sensitive element pairs 5 and 6.

The operating lever 7 is, as described above, supported on the pivot 3a of the base mount 3 vertically, thereby avoiding the deformation of the elastic plate 1 caused by a vertical component of a load applied to the operating lever 7. Specifically, only a lateral component of the applied load is measured accurately.

The operating lever 7 may alternatively be formed only with the support shaft 7b. Each of the strain sensitive elements 5a to 6b may be made of a strain sensitive resistor printed on the elastic plate 1 or alternatively made of a strain gauge bonded to the elastic plate.

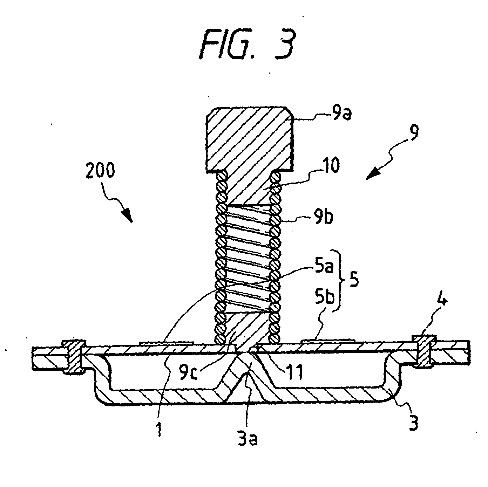

Fig. 3 shows a load sensor 200 according to an embodiment of the invention which is different from the first example only in structure of an operating lever 9. Other arrangements are identical, and explanation thereof in detail will be omitted here.

The operating lever 9 includes a head 9a, a compression coil spring 9b made of metallic wire, and a cylindrical lower mount 9c.

The head 9a has formed thereon a boss 10 which is inserted into an end of the coil spring 9b in press-fit. Similarly, the cylindrical lower mount 9b is inserted into the other end of the coil spring 9b in press-fit and has formed on the bottom thereof a projection 11 which is fitted into or bonded to a central opening of the elastic plate 1 and supported on the pivot 3a of the base mount 3.

The use of the coil spring 9b results in an decrease in stress per unit area of the operating lever 9 when subjected to a lateral force and improves the fatigue of the operating lever 9.

The application of a lateral force to the head 9a will cause the coil spring 9b to be bent, thereby causing the elastic plate 1 to be deformed similar to the first embodiment.

While the present invention has been disclosed in terms of the preferred embodiment in order to facilitate a better understanding thereof, it should be appreciated that the invention can be embodied in various ways without departing from the principle of the invention. Therefore, the invention should be understood to include all possible embodiments and modification to the shown embodiments which can be embodied without departing from the principle of the invention as set forth in the appended claims. The pivot 3a is, as discussed above, provided for absorbing a vertical component of an applied load to prevent it from acting on the elastic plate 1 and may also be omitted.

## Claims

1. A load sensor comprising:

   a mount base (3);
   an elastic plate (1) secured on said mount base;
   an operating member (7) having a given length, said operating member being installed at a first end thereof on said elastic plate (1) so as to be bent in response to application of a load to a second end opposite the first end, producing an elastic force to deform said elastic plate (1); and
   a plurality of strain detecting elements (5,6) attached to said elastic plate at given angular intervals; **characterized in that**:

   said operating member includes a rigid head (9a), a coil spring (9b), and a mount member (9c), the rigid head (9a) and the mount member (9c) being fitted into ends of the coil spring (9b), respectively, the mount member (9c) being disposed through said elastic plate (1) on a pivot (3a) formed on said mount base (3).

2. A load sensor as set forth in claim 1, wherein said pivot supports the first end of said operating member so as to absorb a vertical component of the load acting perpendicular to said elastic plate.

3. A load sensor as set forth in claim 1 or 2, wherein each of said strain detecting elements (5,6) is made of a strain gauge.

4. A load sensor as set forth in claim 1, 2 or 3, wherein each of said strain detecting elements (5,6) is a strain sensitive element printed on said elastic plate (1).

5. A load sensor as set forth in claim 1, wherein said mount base (3) includes a bottom and flanges extending vertically from a periphery of the bottom, and wherein said elastic plate (1) is installed on the flanges so as to cover the bottom, the pivot (3a) being formed on the bottom.

## Patentansprüche

1. Lastsensor mit:

   einer Befestigungsbasis (3);
   einer elastischen Platte (1), die an der Befestigungsbasis befestigt ist;
   einem Betätigungselement (7) mit einer gegebenen Länge, wobei das Betätigungselement mit seinem ersten Ende an der elastischen Platte (1) angebracht ist, um so in Ansprechen auf das Aufbringen einer Last auf ein zweites Ende gegenüberliegend dem ersten Ende gebogen zu werden, wobei eine elastische Kraft erzeugt wird, um die elastische Platte (1) zu verformen; und
   einer Vielzahl von Dehnungsdetektionselementen (5, 6), die an der elastischen Platte in gegebenen Winkelintervallen angebracht sind,

   **dadurch gekennzeichnet, dass**:

   das Betätigungselement einen starren Kopf (9a), eine Schraubenfeder (9b) und ein Befestigungselement (9c) umfasst, wobei der starre Kopf (9a) und das Befestigungselement (9c) jeweils in Enden der Schraubenfeder (9b) eingepasst sind, wobei das Befestigungselement (9c) durch die elastische Platte (1) hindurch an einer Schwenkstelle (3a) angeordnet ist, die an der Befestigungsbasis (3) ausgebildet ist.

2. Lastsensor nach Anspruch 1, wobei die Schwenkstelle das erste Ende des Betätigungsmittels lagert, um so eine vertikale Komponente der Last zu absorbieren, die rechtwinklig auf die elastische Platte wirkt.

3. Lastsensor nach einem der Ansprüche 1 oder 2,

wobei jedes der Dehnungsdetektionselemente (5, 6) eine Dehnungsmesseinrichtung bzw. Spannungsmesseinrichtung ist.

**4.** Lastsensor nach einem der Ansprüche 1, 2 oder 3, wobei jedes der Dehnungsdetektionselemente (5, 6) ein dehnungsempfindliches Element ist, das auf die elastische Platte (1) gedruckt ist.

**5.** Lastsensor nach Anspruch 1, wobei die Befestigungsbasis (3) einen Boden und Flansche umfasst, die sich vertikal von einem Umfang des Bodens erstrecken, und wobei die elastische Platte (1) an den Flanschen angebracht ist, um so den Boden abzudecken, wobei die Schwenkstelle (3a) an dem Boden ausgebildet ist.

**Revendications**

**1.** Capteur de charge comprenant :

une base de montage (3) ;
une plaque élastique (1) fixée sur ladite base de montage ;
un élément d'actionnement (7) présentant une longueur donnée, ledit élément d'actionnement étant installé au niveau d'une première extrémité de celle-ci sur ladite plaque élastique (1) de façon à être plié en réponse à l'application d'une charge sur une deuxième extrémité opposée à la première extrémité, produisant une force élastique pour déformer ladite plaque élastique (1) ; et
une pluralité d'éléments de détection de déformation (5, 6) fixés à ladite plaque élastique à des intervalles angulaires donnés ;

**caractérisé en ce que** :

ledit élément d'actionnement comprend une tête rigide (9a), un ressort hélicoïdal (9b), et un élément de montage (9c), la tête rigide (9a) et l'élément de montage (9c) étant ajustés dans les extrémités du ressort hélicoïdal (9b), respectivement, l'élément de montage (9c) étant disposé, par l'intermédiaire de ladite plaque élastique (1), sur un pivot (3a) formé sur ladite base de montage (3).

**2.** Capteur de charge selon la revendication 1, dans lequel ledit pivot supporte la première extrémité dudit élément d'actionnement de façon à absorber une composante verticale de la charge agissant perpendiculairement à ladite plaque élastique.

**3.** Capteur de charge selon la revendication 1 ou 2, dans lequel chacun desdits éléments de détection de déformation (5, 6) est constitué d'une jauge de contrainte.

**4.** Capteur de charge selon la revendication 1, 2 ou 3, dans lequel chacun desdits éléments de détection de déformation (5, 6) est un élément sensible à la contrainte imprimé sur ladite plaque élastique (1).

**5.** Capteur de charge selon la revendication 1, dans lequel ladite base de montage (3) comprend un fond et des bords s'étendant verticalement depuis une périphérie du fond, et dans lequel ladite plaque élastique (1) est installée sur les bords de façon à couvrir le fond, le pivot (3a) étant formé sur le fond.

FIG. 1

FIG. 2

FIG. 3

# FIG. 4
# PRIOR ART

# FIG. 5
# PRIOR ART